# EUROPEAN PATENT APPLICATION

(11) **EP 1 057 855 A1**
(43) Date of publication of application: **06.12.2000**
(21) Application number: 00304144.9
(22) Date of filing: 17.05.2000
(51) Int. Cl.: C08J 11/10, C08J 11/14, C08J 11/24

(54) **Method of recycling crosslinked silicone compound waste**

(30) Priority: 18.05.1999 JP 13741499; 10.08.1999 JP 22664999
(71) Applicant: YAZAKI CORPORATION, Minato-ku Tokyo 108 (JP)
(72) Inventor: Kawamoto, Takeshi, Susono-shi, Shizuoka (JP)
(74) Representative: Hucker, Charlotte Jane

(57) **Abstract**

Disclosed is a method of recycling crosslinked silicone compound waste, comprising the step of hydrolyzing crosslinked silicone compound waste by bringing said waste into contact with a solvent having a hydroxyl group in a molecule under a supercritical state to thereby recover a non-crosslinked silicone compound compound-like or silicone oil-like product from said waste, or by bringing said waste into contact with an alcohol/water mixture solvent under heating to thereby recover a non-crosslinked silicone compound-like or silicone oil-like product from said waste.

## Description

### FIELD OF THE INVENTION

The present invention relates to a method for the recycling of waste of crosslinked silicone resin or rubber and particularly to a method for the recycling of crosslinked silicone compound waste, in which these crosslinked silicone compound wastes are hydrolyzed to recover a non-crosslinked silicone rubber compound-like or silicone oil-like product from the wastes.

### BACKGROUND OF THE INVENTION

A method (digesting method) of recovering a non-crosslinked silicone rubber compound-like or silicone oil-like product from crosslinked silicone compound waste by hydrolyzing the waste with use of water vapor at a temperature in a range of from 150 to 200°C (JP-A-59-179537, etc.) is heretofore known as a method for the recycling of crosslinked silicone compound, waste (the term "JP-A" as used herein means an "unexamined published Japanese patent application"). In the aforementioned digesting method, however, the rate of hydrolysis was so low that a long time, for example, in a range of from about 5 to about 8 hours was required for the recycling. There was a problem that the cost for the recycling was high.

An object of the present invention in consideration of the aforementioned background-art circumstances is to provide a method for the recycling of crosslinked silicone compound waste, in which crosslinked silicone compound waste can be recycled in a short time at a high decomposition rate and in which the progress of hydrolysis can be made uniform upon respective portions of the waste so that a reclaimed product uniform in quality can be obtained.

The present inventor has made eager investigation to achieve the foregoing object. As a result, it has been found that crosslinked silicone compound waste can be decomposed in a short time by bringing the waste into contact with a solvent having a hydroxyl group in a molecule under a supercritical state.

The present inventor has also found that crosslinked silicone compound waste can be decomposed uniformly in a short time by hydrolyzing the waste with an alcohol/water mixture solvent under heating. This has been concluded by the accomplishment of the present invention.

That is, according to the present invention, in order to achieve the above object, there is provided a method of recycling crosslinked silicone compound waste, comprising the step of hydrolyzing waste of a crosslinked silicone compound by bringing the waste into contact with a solvent having a hydroxyl group in a molecule under a supercritical state to thereby recover a non-crosslinked silicone rubber compound-like or silicone oil-like product from the waste.

Further, the present invention provides a method of recycling crosslinked silicone compound waste, comprising the step of hydrolyzing waste of a crosslinked silicone compound by bringing the waste into contact with an alcohol/water mixture solvent under heating to thereby recover a non-crosslinked silicone compound-like or silicone oil-like product from the waste.

### BRIEF DESCRIPTION OF THE DRAWINGS

Fig. 1 is a spectral graph of infrared spectroscopic analysis of reclaimed products obtained in Example 1 and Comparative Example 1; and
Fig. 2 is a graph in which the time required for the recycling is plotted while both treating temperature and pressure are changed.

### DETAILED DESCRIPTION OF THE INVENTION

The present invention will be described below in detail.

According to the present invention, crosslinked silicone compound waste as a subject of recycling is not limited, and the composition, physical characteristic, crosslinking method, mode of process such as molding, purpose of use, etc. thereof are ignored inclusive of the presence/absence of various additives such as a filler, etc. Further, the shape and size of the crosslinked silicone compound waste are not limited but it is preferable from the point of view of acceleration of the hydrolyzing reaction that the crosslinked silicone compound waste is cut into small pieces. For example, when the crosslinked silicone rubber waste is subjected to a recycling process, this should be shattered into a grain size in a range of from 10 to 50 mm approximately.

The solvent to be used at hydrolysis in the present invention is not particularly limited but any suitably selected solvent may be used so long as the solvent has a hydroxyl group in a molecule. For example, alcohol is used as the solvent. Among alcohols, methanol, ethanol or propanol low both in critical temperature and in critical pressure can be preferably used.

Further, plural kinds of solvents selected from these hydroxyl group-containing solvents may be used in combination as occasion demands.

Each of the foregoing solvents is used in a supercritical state. The critical temperatures and critical pressures of alcohols such as methanol, ethanol and propanol are as shown in Table 1.

**Table 1**

| Material Name | Critical Temperature (°C) | Critical Pressure (MPa) |
|---|---|---|
| Methanol | 239.6 | 8.09 |
| Ethanol | 240.9 | 6.14 |
| 2-Propanol | 235.3 | 4.76 |

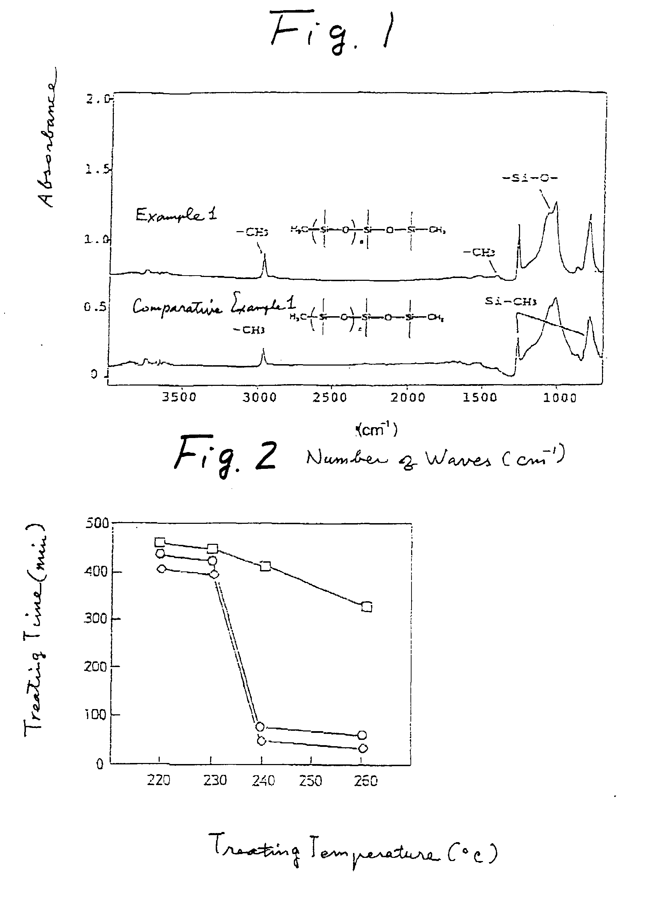

Fig. 2 is a graph showing results of measurement of the treating time in the case where crosslinked silicone rubber is treated with methanol while both temperature and pressure for the treatment are changed. It is found that the recycling time is shortened rapidly when the temperature reaches the critical temperature in the condition of a pressure (8 MPa, 9 MPa) not lower than the critical pressure (plot ○, ◇) whereas a long time is required for the recycling even when the temperature is raised to a value not lower than the critical temperature (about 240°C) in the condition of a pressure of 7 MPa which is lower than the critical pressure (plot □).

Further, the aforementioned crosslinked silicone compound waste may be brought into contact with an alcohol/water mixture solvent under heating. Methanol, ethanol and propanol can be preferably used as the alcohol or a mixture thereof may be used. The water content of the mixture solvent is preferably at least 20 % by weight. Because water is highly miscible with alcohol and highly diffusible into the crosslinked silicone compound, water has a function of making alcohol permeate the inside of the crosslinked silicone compound waste. Accordingly, if the water content is smaller than 20 % by weight, unevenness occurs in decomposition because alcohol cannot be made to permeate the inside of the crosslinked silicone compound waste sufficiently. Further, the upper limit of the water content is not particularly limited but about 20 % by weight is suitable as the upper limit because the rate of hydrolysis decreases as the water content increases.

The heating temperature is not particularly limited but the rate of hydrolysis decreases as the temperature becomes lower. Further, raising the temperature too high is uneconomical because corresponding increase of the hydrolysis rate cannot be obtained.

For these reasons, the heating temperature is preferably selected to be in a range of from 220 to 250°C.

For carrying out the present invention, a reactor such as an autoclave having a heating/pressurizing function is filled with crosslinked silicone compound waste and the aforementioned solvent and kept at a temperature of not lower than the critical temperature of the solvent and under a pressure of not lower than the critical pressure of the solvent, that is, in a supercritical state for a predetermined time, or a vessel having a stirring function is filled with the crosslinked silicone compound waste and the alcohol/water mixture solvent and kept at a predetermined temperature while the waste and the mixture solvent are stirred for a predetermined time. As a result, the crosslinked silicone compound waste is hydrolyzed uniformly up to the inside thereof and converted into a non-crosslinked silicone rubber compound-like product or a silicone oil-like product.

In the aforementioned process, the amount of use of the alcohol/water mixture solvent is preferably selected to be not smaller than 300 parts by weight per 100 parts by weight of the crosslinked silicone compound waste.

Further, the time required for the recycling process can be selected suitably in accordance with the kind of the crosslinked silicone compound waste as a subject of recycling, the kind and amount of the solvent or the alcohol/water mixture solvent to be used, the temperature and the pressure in a supercritical state, the heating temperature, the target degree of decomposition, etc. The time is, however, satisfied by about 15 minutes, so that the time is shortened considerably compared with the background-art digesting method.

Incidentally, the reclaimed product is apt to be formed as a silicone oil-like product as the treating temperature or pressure becomes higher and as the treating time becomes longer.

Then, the alcohol/water mixture solvent is removed by heating, or the like, from the subject of recycling. Thus, the reclaimed product is obtained in the form of a non-crosslinked silicone rubber compound or in the form of silicone oil.

The reclaimed product obtained in the aforementioned manner can be reused as a crosslinked silicone rubber molding article or for other purposes (for example, silicone grease, oil, etc.) , for example, after the reclaimed product is molded and crosslinked to be hardened again.

### EXAMPLES

The present invention will be described more specifically on the basis of Example and Comparative Example but is not limited to the following example at all.

### EXAMPLE 1

After 50 g of a shattered matter of a crosslinked silicone rubber (dimethylsiloxane) molding article with a mean grain size of 5 mm and 150 g of methanol were put in an autoclave (SUS316) with a volume of 500 cc, the temperature of the inside of the autoclave was controlled to be 240+3°C by a temperature controller and the pressure of the inside of the autoclave was controlled to be within 8+0.1 MPa by adjustment of a valve. While the methanol was kept in a supercritical state in the aforementioned manner, a hydrolyzing process was carried out for 15 minutes. As a result, 49 g of a rubber compound-like reclaimed product were obtained. The infrared spectroscopic analysis spectrum of the reclaimed product was as shown in Fig. 1.

It was obvious from Fig. 1 that the reclaimed product obtained by the process in Example 1 was of the same dimethylsiloxane composition as the reclaimed product obtained by the process using the background-art digesting method in Comparative Example 1. Hence, it is found that the treating time can be shortened to about 15 minutes by treatment with the supercritical solvent.

### EXAMPLE 2

After a sheet (150×150×3mm) of commercially available crosslinked silicone rubber (dimethyl silicone rubber) and 200 ml of a mixture solvent containing methanol and distilled water in proportion shown in Table 2 were put into a stirrer-including autoclave with a volume of 500 cc, a hydrolyzing process was carried out for 15 minutes while the temperature of the inside of the autoclave was controlled to be 250°C by a temperature controller. Incidentally, in the case of Solvent 4 containing only water, the process was carried out for 8 hours.

**Table 2**

| | Solvent 1 | Solvent 2 | Solvent 3 | Solvent 4 |
|---|---|---|---|---|
| Water Content (% by weight) | 0 | 20 | 50 | 100 |
| Methanol Content (% by weight) | 100 | 80 | 50 | 0 |

Then, after the process, both the surface layer portion (within 0.5 mm depth from the surface) and the inside portion (1 mm deep from the surface) of the sheet is subjected to thermoanalysis to thereby compare the tolerable temperatures of the two portions with each other. The results are shown in Table 3 below.

**Table 3**

| Solvent Used | Solvent 1 | Solvent 2 | Solvent 3 | Solvent 4 |
|---|---|---|---|---|
| Surface Tolerable Temperature (°C) | 354.3 | 361.2 | 371.8 | 412.0 |
| Inside Tolerable Temperature (°C) | 366.5 | 362.9 | 372.1 | 411.7 |
| Surface-Inside Temperature Difference (°C) | 12.2 | 1.7 | 0.3 | 0.3 |

It was shown that the difference between degrees of progress of hydrolysis became larger as the temperature difference between the surface and inside portions became larger. It was found that, in case of Solvent 1 containing only methanol, hydrolysis had not progressed sufficiently because the tolerable temperature of the inside portion was higher by about 12°C. On the other hand, it was found that, in cases of Solvents 2 and 3 each used as a mixture of methanol and water, hydrolysis had progressed uniformly upon both surface and inside portions because the temperature difference was small.

Incidentally, in case of Solvent 4 containing only water, a long time was required for the process though hydrolysis was performed uniformly because the temperature difference between the surface and inside portions was small.

Further, sections of the sheets treated with Solvents 1 and 3 respectively were observed by using a microscope. As a result, a boundary portion caused by difference in organic geometry between the surface and inside portions was found clearly in the section of the sheet treated with Solvent 2 whereas such a boundary portion was not found in the section of the sheet treated with Solvent 3 so that it was confirmed that hydrolysis was performed uniformly.

As described above, crosslinked silicone compound waste can be hydrolyzed uniformly up to the inside thereof in a short time by the recycling method according to the present invention, so that a uniform reclaimed product can be obtained.

While the invention has been desribed in detail and with reference to specific embodiments thereof, it will be apparent to one skilled in the art that various changes and modifications can be made therein without departing from the spirit and scope thereof.

This application is based on Japanese patent applications Hei-11-137414 filed on May 18, 1999 and Hei-11-226649 filed on August 10, 1999, the entire contents of which are incorporated herein by reference.

## Claims

1. A method of recycling crosslinked silicone compound waste, comprising the step of hydrolyzing waste of a crosslinked silicone compound by bringing said waste into contact with a solvent containing a hydroxyl group under a supercritical state to thereby recover a non-crosslinked silicone compound-like or silicone oil-like product from said waste.

2. A method of recycling crosslinked silicone compound waste according to Claim 1, wherein said solvent is alcohol.

3. A method of recycling crosslinked silicone compound waste, comprising the step of hydrolyzing waste of a crosslinked silicone compound by bringing said waste into contact with an alcohol/water mixture solvent under heating to thereby recover a non-crosslinked silicone compound-like or silicone oil-like product from said waste.

4. A method of recycling crosslinked silicone compound waste according to Claim 3, wherein said alcohol/water mixture solvent contains at least 20 % by weight of water.

5. A method of recycling crosslinked silicone compound waste according to Claim 3 or Claim 4, wherein the rate of hydrolysis is controlled on the basis of heating temperature and time.
